# FASCICULE DE BREVET EUROPEEN

(11) **EP 3 658 360 B1**
(45) Date de publication et mention de la délivrance du brevet: **18.12.2024**
(21) Numéro de dépôt: 18740863.8
(22) Date de dépôt: 23.07.2018
(51) Int. Cl.: B29C 70/46, B29B 11/16, B29C 70/22, B29C 70/24, B29B 15/10, B29K 101/12, B29C 43/36

(54) **PROCÉDÉ POUR LA FABRICATION D'UNE PIÈCE COMPOSITE DE FORME COMPLEXE**
VERFAHREN ZUR HERSTELLUNG EINES VERBUNDBAUTEILS MIT KOMPLEXER FORM
METHOD FOR THE MANUFACTURE OF A COMPOSITE COMPONENT OF COMPLEX SHAPE

(30) Priorité: 25.07.2017 FR 1770791
(43) Date de publication de la demande: 03.06.2020
(73) Titulaire: Roctool, 73370 Le Bourget-du-Lac (FR); Louis Vuitton Malletier, 75001 Paris (FR)
(72) Inventeur: FEIGENBLUM, José, 73170 Saint Paul (FR)
(74) Mandataire: Hamann, Jean-Christophe
(86) Numéro de dépôt international: PCT/EP2018/069958
(87) Numéro de publication internationale: WO 2019/020583

(56) Documents cités:
- WO-A1-2016/144971
- DE-A1- 3 341 292
- FR-A1- 2 928 808
- FR-A1- 3 034 093
- US-B1- 8 071 008

## Description

L'invention concerne un procédé et un dispositif pour la fabrication d'une pièce composite de forme complexe. L'invention est plus particulièrement destinée à la réalisation d'une pièce composite en 3 dimensions telle qu'une boîte ou un dôme, ou encore, comportant une pluralité de reliefs en saillie. L'invention s'applique à de nombreux domaines, notamment, mais non exclusivement, à la réalisation de bagages ou de capots pour des matériels électronique tels que des tablettes ou des écrans de télévision, la réalisation de casques ou d'équipements de protection, plus généralement à des pièces composites de forme tridimensionnelle réalisées un grande série, et plus particulièrement, mais non exclusivement lorsque ces formes tridimensionnelles ne sont pas développables.

L'art antérieur dans ces domaines est par exemple illustré par le document EP 2 694 277. Ce document décrit la réalisation d'une forme de coque rectangulaire à bords tombés, sous la forme générale d'une boîte à 5 faces, à partir d'un flan plan, constitué d'une stratification de tissus pré-imprégnés d'un polymère thermoplastique. Lesdits tissus sont formés et compactés / consolidés en une pièce composite renforcée par des fibres continues, par un ensemble poinçon-matrice, alors qu'un dispositif de serre-flan permet de maintenir les fibres sous tension lors de la conformation de la stratification à la forme désirée. Cette technique donne satisfaction mais impose un détourage conséquent de la pièce réalisée après le formage et la consolidation, et ne permet pas de réaliser des emboutis profonds. Les « coins de malle » connectant les jonctions trièdres entre les faces de la boîte sont des zones particulièrement sollicitées, dans lesquelles sont susceptibles de se produire des essorages du polymère, laissant apparaître des fibres non revêtues, inesthétiques, voir des plis ou des déchirures.

Le document WO 2016/144971 décrit un procédé pour le formage d'une pièce composite de forme complexe par expansion d'une préforme tricotée à plat,

L'invention vise à remédier aux inconvénients de l'art antérieur et concerne à cette fin un procédé tel que décrit par la revendication 1.

Ainsi le procédé de tricotage permet d'obtenir une préforme de forme tridimensionnelle, correspondant sensiblement à la forme de la pièce finale, complète, sans assemblage de plis et sans conformation par déformation.. L'utilisation d'une cavité fermée associée au cycle de pression-température permet d'obtenir directement une pièce aux cotes finies avec des bords nets ne nécessitant pas de détourage. La profondeur d'embouti n'est pas limitée du fait de l'absence de formage. La préforme étant pré-imprégnée d'un polymère thermoplastique, elle peut être stockée sans limite de durée et produite sur un site distant du site de transformation. Le procédé est donc particulièrement adapté à une production industrielle en grande série adaptée aux domaines visés par l'invention.

Le terme « préimprégné » dans le contexte de l'invention et appliqué à la préforme obtenue par le procédé objet de l'invention, désigne une préforme d'apparence sèche et souple, comprenant le polymère constituant la matrice de la future pièce composite. Les moyens pour intégrer le polymère à une préforme tricotée répondant à ces caractéristiques sont décrits dans des modes de réalisation particuliers de l'invention. L'imprégnation proprement dite a lieur par percolation entre les fibres du polymère mis en fusion lors des étapes d) et e) du procédé objet de l'invention.

L'invention est avantageusement mise en oeuvre selon les modes de réalisation et les variantes exposés ci-après, lesquels sont à considérer individuellement ou selon toute combinaison techniquement opérante.

Selon un mode de réalisation, le procédé objet de l'invention comprend, avant l'étape d) une étape consistant à tirer au vide la cavité moulante délimitée par le poinçon et la matrice et contenant la préforme. Ainsi, le tirage au vide de ladite cavité et l'application de la première pression permettent d'assurer le dégazage de la préforme et une bonne imprégnation de celle-ci durant la fusion du polymère d'imprégnation.

Avantageusement, le procédé objet de l'invention comprend entre les étapes d) et f) une étape consistant à :
g. maintenir la température pendant un temps adapté à l'imprégnation de la préforme par le polymère.

Ce temps de maintien, fonction de la viscosité du polymère et du tau de fibres permet d'assurer une imprégnation uniforme de la préforme.

Avantageusement, une deuxième pression est appliquée sur la préforme au cours de l'étape g). Ainsi, l'application de la seconde pression, lorsque le polymère constituant la matrice est déjà fluidifié, permet de réaliser le compactage. Le maintien de cette pression pendant le refroidissement permet de calibrer l'épaisseur et la forme de la pièce.

Avantageusement, la préforme tricotée est obtenue à partir d'un fil constitué de de brins de la fibre de renfort comêlés avec des brins constitués du polymère d'imprégnation. Ce mode de réalisation assure une imprégnation uniforme de la préforme au cours des étapes d) et e).

De manière équivalente, la préforme tricotée est obtenue à partir d'un fil constitué de la fibre de renfort enduite du polymère d'imprégnation.

Selon une autre variante de réalisation la préforme est tricotée à partir d'un fil constitué du renfort et d'un fil constitué du polymère d'imprégnation.

Selon un cas particulier de cette dernière variante, la fibre de renfort est un polymère dont la température de fusion est supérieure à la température de fusion du polymère d'imprégnation.

Selon une variante de réalisation, la préforme est tricotée en utilisant la technique du tricotage à fléchage. Cette variante utilise la technique de tricotage la plus répandue et la plus versatile en termes de formes réalisable, néanmoins dans de nombreux cas, la finition ou fermeture de la préforme tridimensionnelle nécessite la réalisation d'une couture.

À cette fin selon des variantes de mise en oeuvre de ce mode de réalisation, le procédé objet de l'invention comprend avant l'étape b) une étape de couture pour la fermeture du contour de la préforme. Ce mode de réalisation permet de préparer des préformes de contour fermé prête à être utilisées, même si la technique de tricot ne permet pas d'obtenir cette caractéristique directement lors du tricotage.

Alternativement, le procédé comprend entre les étapes b) et c) une étape consistant à :
h. fermer le contour de la préforme par une soudure.

Ce mode de réalisation tire avantage de la constitution de la préforme intégrant le polymère d'imprégnation. Cette soudure est réalisée avant l'étape b) ou lorsque la préforme est placée sur le poinçon ou dans la matrice, ceci afin d'assurer un positionnement précis de ladite soudure.

Selon une autre variante de réalisation, la préforme est tricotée en utilisant la technique de la maille reportée. Cette technique produit, selon les variantes, un tissus en simple ou double jersey et permet de réaliser une préforme tridimensionnelle d'une seule pièce sans couture ou joint, au prix d'une complexité de tricotage plus élevée.

Selon un mode de réalisation avantageux du procédé objet de l'invention, la première et la deuxième pression sont appliquées sur la préforme en faisant varier entre deux valeurs l'entrefer entre le poinçon et la matrice, au niveau de la cavité fermée. Ce mode de réalisation assure un contrôle plus précis de l'épaisseur et donc du calibrage de la préforme.

L'invention est avantageusement mise en oeuvre au moyen d'un outillage qui comporte :
x. un poinçon constitué d'un matériau électriquement conducteur ;
y. une matrice appairée au poinçon de sorte à former une cavité entre les surfaces moulantes du poinçon et la matrice, et constituée d'un matériau électriquement conducteur ;
z. un circuit d'induction pour le chauffage des surfaces moulantes du poinçon ou de la matrice;
u. un générateur de courant à haute fréquence pour alimenter le circuit d'induction.

L'utilisation de l'induction comme mode de chauffage autonome de l'outillage permet de réduire les temps de cycle et la réalisation de pièces en grande série.

Selon un mode de réalisation, la cavité délimitée entre le poinçon et la matrice comporte une conicité s'évasant vers la base du poinçon. Ainsi, la pression sur la préforme est pilotée par le déplacement relatif de la matrice et du poinçon, qui en fonction de la conicité le long des bords tombés, permet de maîtriser la valeur de l'entrefer dans la cavité fermée sur toutes les faces de la préforme..

Avantageusement, le poinçon ou la matrice comprennent un circuit de refroidissement pour la circulation d'un fluide. Cet aménagement de réduire le temps de cycle de réalisation d'une pièce en accélérant l'étape f) du procédé.

Avantageusement, les surfaces moulantes du poinçon et de la matrice délimitant la cavité sont constituées d'un matériau ferromagnétique dont le point de Curie est égal à la température de fusion du polymère imprégnant la préforme. Ce mode de réalisation simplifie le contrôle de la température dans la cavité, notamment pour éviter les brûlures lorsque les fibres de renfort de la préforme sont sujettes à ce phénomène.

Selon un mode de réalisation de l'outillage pour la mise en oeuvre du procédé objet de l'invention, celui-ci comprend une matrice constituée d'un matériau thermiquement conducteur et un inducteur s'étendant dans une cavité pratiquée dans ladite matrice dans lequel le volume de la cavité moulante est variable indépendamment du rapprochement du poinçon et de la matrice. Ce mode réalisation est adapté à la mise en oeuvre d'une préforme comprenant des fibres électriquement conductrices ou non. La variation du volume de la cavité moulante permet d'assurer le compactage et la calibration en épaisseur de la pièce finie.

Selon une variante de réalisation de ce mode de réalisation de l'outillage, le poinçon comprend une vessie gonflable. Cette variante permet d'assurer une pression uniforme sur toute la surface de la préforme notamment au cours des étapes e) et f) du procédé.

Selon une autre variante de ce mode de réalisation de l'outillage, le poinçon comprend une partie mobile actionnée par le rapprochement de la matrice et du poinçon. Cette variante permet de contrôler l'entrefer donc l'épaisseur de la pièce finie dans la cavité moulante.

Selon autre variante le poinçon est constitué d'un bâche souple sur laquelle est appliquée une pression gazeuse pour la réalisation du des étapes c) à f) du procédé objet de l'invention.

Avantageusement la bâche comprend sur sa face en contact avec la préforme, une charge d'un matériau sensible au chauffage par induction. Ainsi la bâche participe au chauffage uniforme de la préforme.

L'invention est exposée ci-après selon ses modes de réalisation préférés, nullement limitatifs, et en référence aux figures 1à 5, dans lesquelles :
- la figure 1 représente une exemple selon une vue en coupe un exemple de réalisation d'un outillage, représenté en position ouverte, pour la mise en oeuvre de l'invention
- la figure 2 montre deux exemples de préforme tricotées en forme de demi coque comprenant des zones de raccordement trièdre :
- la figure 3, illustre selon une vue en coupe et en position ouverte un autre exemple de réalisation d'un outillage pour la mise en oeuvre du procédé objet de l'invention ;
- la figure 4 représente un synoptique du procédé objet de l'invention ;
- et la figure 5 montre selon une vue en perspective un exemple de réalisation de d'une préforme tricotée à contour fermé comprenant 5 faces et des zones de raccordement trièdre entre les faces.

Les techniques de tricotage sont connues de l'art antérieur et permettent de réaliser un assemblage tridimensionnel d'une pluralité de fils entrelacés selon des boucles ou mailles. Selon le mode de tricotage utilisé, des préformes complexes sont réalisées en une seule opération de tricot. Selon d'autres techniques de tricot qui ne font pas partie de l'invention, le contour de la pièce ne peut pas être fermé et nécessite dans ce cas une étape de fermeture par couture, ou plus avantageusement par soudure comme exposé plus loin.

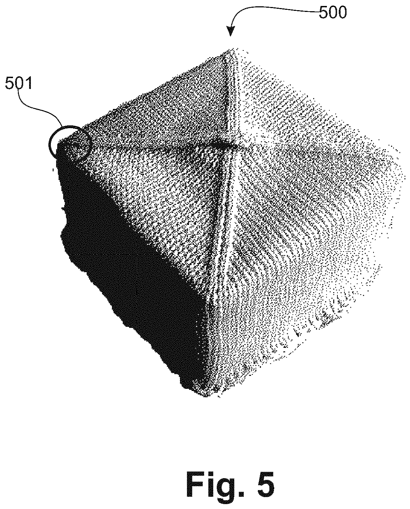

La figure 5 montre un exemple d'une préforme (500) de forme tridimensionnelle comprenant 5 faces et 4 zones (501) de raccordement trièdre entre les faces, ces zones de raccordement sont couramment désignées par le terme de « coin de malle ». Pour voir correctement la forme tridimensionnelle de la préforme tricotée (500) celle-ci est ici représentée posée sur un support, lequel support est par exemple le poinçon d'un outillage. La technique de tricotage utilisée dans cet exemple de réalisation permet une continuité des fibres sur toute la surface de la préforme, le contour est fermé. Les brins sont continus, y compris dans les zones de raccordement trièdre (501) qui sont des zones non développables, c'est-à-dire qu'elles ne peuvent pas être mises à plat tout en conservant la longueur des brins. Comme le montre cette figure, la technique de tricotage permet d'obtenir une préforme qui est déjà à la forme finale de la pièce ou à une forme très approchante de celle-ci.

L'étape de tricot du procédé objet de l'invention est avantageusement, mais non exclusivement, mise en oeuvre au moyen d'un métier à mailles cueillies à plat qui offre le plus de versatilité en termes de formes réalisables et de contour fermé. Les formes réalisables comprennent des formes de boîte comprenant des coins de malle, éventuellement comprenant des évidements.

Selon l'art antérieur, le tricotage tridimensionnel est utilisé pour la réalisation de préforme fibreuses sèches, ultérieurement imprégnées d'une résine thermodurcissable par un procédé mettant en oeuvre un transfert de résine liquide dans un moule, tel que le procédé RTM (*Resin Transfer Molding*).

Ce procédé n'est cependant pas adapté à la fabrication en grande série.

Le procédé objet de l'invention met en oeuvre une préforme fibreuse tricotée, comprenant en elle même le polymère qui constituera la matrice de la pièce composite.

À cette fin, l'étape de tricot du procédé objet de l'invention met en oeuvre des fibres de renfort tels que des fibres de verre, de carbone, d'aramide, métalliques, polymères, ou des fibres naturelles telles que des fibres de lin, de coco, de sisal, de jute, ou de bambou, le cas échéant préalablement ensimées et filées, ou une combinaison de ces fibres, combinées au polymère thermoplastique constituant la matrice de la future pièce composite.

À titre d'exemples, ledit polymère est introduit comêlé aux fibre de renfort, par exemple sous la forme de brins de ladite fibre, filés avec des brins dudit polymère et éventuellement torsadés, ou sous la forme de fibres de renfort enduites dudit polymère, ou encore en tricotant des fils dudit polymère avec les fils constitués des fibres de renfort.

Quelque soit le mode de réalisation, l'absence de pégosité du polymère thermoplastique permet sa mise en oeuvre conjointement aux fibres de renfort au cours de l'étape de tricot.

À titre d'exemples non limitatifs, ledit polymère thermoplastique est un polyethercétone (PEK), un polyether ethercétone (PEEK), un polyétherimide (PEI), un polyester thermoplastique, un polysulfure de phénylène (PPS), un polyamide (par exemple PA6 ou PA6-6), un acrylonitrile butadiène styrène (ABS).

Selon d'autres exemples, ledit polymère est choisi parmi des polymères biosourcés tels que :
- les polyamides (PA), notamment le PA11
- le polyéthylène (PET) bio-sourcé ;
- l'acide polylactique (PLA) ;
- ou encore des polyesters bio-sourcés

La combinaison du mode obtention de la préforme, qui entrelace les fibres et permet une continuité de cet entrelacement sur toute la forme, et d'un polymère thermoplastique, permet la réalisation de pièces légères particulièrement résistantes aux impacts, et selon le choix du polymère, résistantes à la température et à la flamme. Ainsi le procédé objet de l'invention est particulièrement adapté à la réalisation de pièces soumises à ce type de sollicitation.

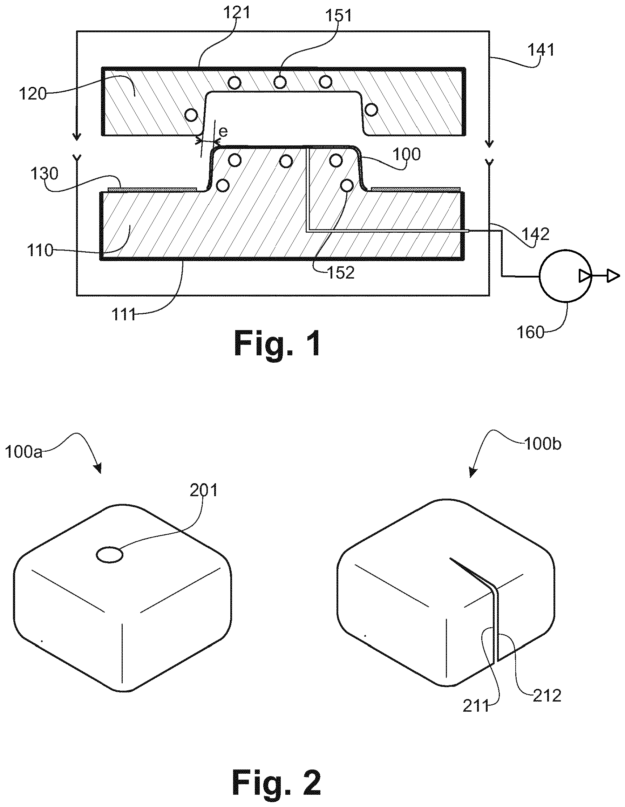

Figure 1, selon un exemple de réalisation du procédé objet de l'invention, adapté à la mise en oeuvre d'une préforme dont les fibres de renfort ne sont pas électriquement conductrices, la préforme (100), préalablement tricotée et comprenant les fibres de renfort et le polymère thermoplastique d'imprégnation de la pièce finale, est placée sur la partie constituant le poinçon de l'outillage.
Figure 2, selon un exemple de mise en oeuvre non limitatif, la préforme (100a) est en forme de coque, comprenant des zones de raccordement trièdre, nommées « coins de malle ». À titre d'exemple illustratif, il s'agit d'une demi coque de valise. Selon un exemple de réalisation, ladite préforme (100a) comprend un évidement (201) directement réalisé lors du tricot de ladite préforme. En comparaison des techniques de l'art antérieur pour la mise en oeuvre des matériaux composites thermoplastiques, comme l'estampage ou le compactage en forme, la technique d'obtention de la préforme par tricot permet de conserver dans les zones de raccordement, notamment les coins de malle, un tau de renfort comparable au tau de renfort dans le reste de la pièce tout en évitant la formation de plis dans ces mêmes zones.

En revenant à la figure 1, si la technique de tricot permet la réalisation d'une telle préforme selon un contour fermé, alors, l'outillage étant en configuration ouverte, ladite préforme (100) est simplement enfilée sur le poinçon(1 10) en coiffant ledit poinçon avec ladite préforme (100), après avoir, si nécessaire, pulvériser un agent démoulant sur ledit poinçon. Une telle opération est aisément réalisée manuellement ou au moyen d'un manipulateur ou d'un robot. La mise en oeuvre de l'outillage auto-chauffant telle que présentée ci-après, permet que le poinçon soit à température ambiante durant cette étape.

Figure 2, selon un autre mode de réalisation ne faisant pas partie de l'invention, la technique de tricot utilisée ne permet pas de fermer le contour de la préforme (100b) et ladite préforme comprend une discontinuité de contour, délimitée par deux bords ouverts (211, 212).

En revenant à la figure 1, si la technique de tricot ne permet pas d'obtenir une préforme tricotée de contour fermé, alors, dans un mode de réalisation qui ne fait pas partie de l'invention, la préforme étant placée sur le poinçon (110), le positionnement de ladite préforme dans l'outillage est stabilisée en réalisant au moins 2 points de soudure unissant les bords ouverts de la discontinuité de contour. La présence du polymère dans la préforme tricotée permet de réaliser une telle soudure. Ladite soudure est réalisée par exemple au moyen d'un fer à souder., alternativement, elle est réalisée sous la forme de points ou d'une ligne de soudure par d'autres moyens connus de l'art antérieur, tels que par laser ou par ultrasons.

Selon ce mode de mise en oeuvre, qui ne fait pas partie de l'invention, le poinçon de l'outillage comprend des moyens de positionnement des bords ouverts de la préforme l'un par rapport à l'autre, par exemple sous la formes de picots ou de crochets enfilés dans les mailles. Ainsi, la préforme est parfaitement positionnée sur l'outillage.

L'outillage est constitué d'au moins deux parties (110, 120) séparables entre une configuration ouverte et une configuration fermée, définissant un poinçon (110) et une matrice (120). Le poinçon et la matrice sont appairés de sorte qu'ils délimitent entre eux, au niveau de leurs surfaces moulantes et lors de la fermeture de l'outillage, un entrefer (e), exagéré sur la figure, correspondant à l'épaisseur finale de la pièce réalisée. Ainsi, l'espace compris entre le poinçon et la matrice défini une cavité moulante dans laquelle se trouve la préforme (100).

Selon un exemple de réalisation, des moyens (160) permettent de tirer au vide la cavité moulante comprenant la préforme (100) une fois l'outillage fermé.

Selon un exemple de réalisation, le poinçon et la matrice sont constitués d'un matériau ferromagnétique et sont revêtus sur leurs faces extérieures, en dehors des surfaces moulantes d'une couche continue (111, 121) d'un matériau électriquement conducteur et non ferromagnétique, tel que du cuivre. Lors de la fermeture de l'outillage, les parties de l'outillage constituant le poinçon et la matrice sont séparées l'une de l'autre par une couche de matière électriquement isolante (130). Cette couche de matière isolante assure également l'étanchéité de la cavité formée entre le poinçon et la matrice lors de la fermeture de l'outillage.

L'ensemble poinçon matrice est inséré dans un circuit d'induction constitué par deux demi-spires (141, 142) dont l'une (141) est intégré au poinçon et l'autre (142) à la matrice. La fermeture de l'outillage a pour effet de connecter électriquement les deux demi-spires. La spire ainsi formée, entourant l'outillage, est connectée à un générateur de courant à haute fréquence (non représenté), de sorte que l'alimentation de ladite spire provoque la circulation de courants induits, sur les surfaces de l'outillage. Les courants induits circulent dans une épaisseur réduite de matière à la surface de l'outillage. Ainsi, lesdits courants induits circulent dans les couches de revêtement (121, 111), et du fait de la coupure réalisée par la couche isolante (130) entre les deux parties de l'outillage, sur les surfaces moulantes de la cavité définie entre le poinçon et la matrice.

Lesdites surfaces moulantes étant constituées d'un matériau ferromagnétique montent rapidement en température du fait de la circulation de ces courants induits à haute fréquence, et transmettent leur chaleur à la préforme (100).

Sous l'effet de la température, le polymère compris dans la préforme tricotée est porté à sa température de fusion, et, la préforme étant confinée dans une cavité fermée et étanche, ledit polymère imprègne uniformément la préforme.

La pression de fermeture appliquée sur le moule ainsi que l'entrefer (e) entre le poinçon et la matrice, calibrent l'épaisseur de la pièce finale. L'utilisation d'un chauffage par induction, dans la configuration du moule selon ce mode de réalisation, permet de concentrer le chauffage sur les surfaces moulantes de la cavité, sans avoir besoin de chauffer l'ensemble de la masse de l'outillage.

Lesdites surfaces moulantes montent rapidement en température, ladite température est contrôlée, par exemple, en sélectionnant le matériau ferromagnétique constituant le moule en fonction de sa température de Curie.

Avantageusement, le poinçon (110) et/ou la matrice (120) de l'outillage comprennent des canaux (151, 152) pour la circulation d'un fluide caloporteur, par exemple de l'eau, permettant un refroidissement rapide des surfaces moulantes.

Ainsi, la cavité moulante et la préforme (100) étant portées à une température au moins égale à la température de fusion du polymère compris dans ladite préforme, ladite température est maintenue pendant un temps adapté compris entre quelques secondes et 1 minutes, pour assurer l'imprégnation uniforme de la préforme par le polymère.

Ledit temps de maintien est fonction du taux de renfort fibreux et de la viscosité du polymère en fusion à la température de maintien. Plus le polymère est visqueux et plus le taux de fibres et élevé, plus le temps de maintien est important. Le temps de maintien est aisément déterminé par essai.

Après le temps de maintien approprié, l'alimentation électrique de la spire (141, 142) est arrêtée, et la cavité moulante est refroidie par la circulation d'un fluide caloporteur dans les canaux (151, 152) de refroidissement de l'outillage.

Durant les étapes de chauffage, de maintien et de refroidissement, la pression de fermeture de l'outillage est maintenue.

Selon une variante de mise en oeuvre une seconde pression, supérieure à la première pression, est appliquée sur la préforme en fin de chauffage et pendant l'étape de maintient. Cette seconde pression est appliquée, par exemple, en déplaçant relativement le poinçon par rapport à la matrice. Selon un exemple de mise en oeuvre, le poinçon et la matrice présentent une légère conicité, s'évasant vers la base du poinçon de sorte que ce déplacement relatif applique ladite pression, par la réduction de l'entrefer (e), sur toutes les surfaces de la préforme.

Lorsque le refroidissement de la cavité moulante par la circulation du fluide caloporteur réduit à température de celle-ci à une température inférieure à la température de transition vitreuse du polymère, ou plus généralement à une température où la rigidité du polymère est suffisante pour pourvoir manipuler la pièce ainsi réalisée sans la déformer, le moule est ouvert et la pièce est démoulée.

Puis le cycle reprend avec une nouvelle préforme. Le temps de fabrication de la pièce entre deux ouvertures du moule est fonction de la dimension de la pièce, de la nature du polymère et du taux de fibres, mais d'une manière générale est compris entre 1 et 5 minutes, essentiellement fonction du temps de maintien à température.

L'utilisation d'un chauffage par induction permet d'assurer qu'une température de chauffage suffisante est atteinte lors de chaque cycle pour assurer une imprégnation uniforme de la pièce. La vitesse de chauffage, de l'ordre de 2°C.s⁻¹, autorisée par ce mode de chauffage, permet également la mise en oeuvre de fibres naturelles, sensibles à la brûlures, sans risque de dégradation desdites fibres.

Les étapes de mise en oeuvre décrites ci-avant s'appliquent de la même manière en positionnant initialement la préforme dans la matrice plutôt que sur le poinçon.

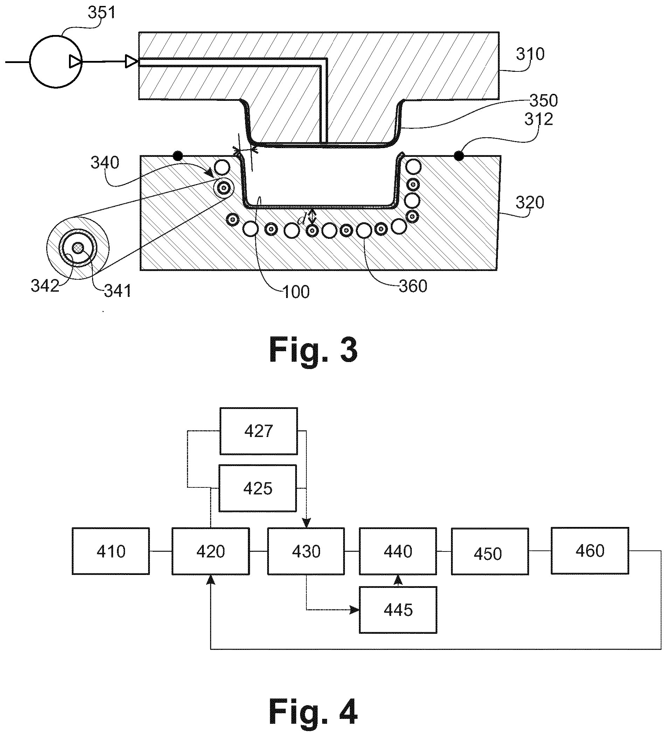

Figure 3, selon un autre exemple de mise en oeuvre du procédé objet de l'invention, adapté à tout type de fibre y compris des fibres électriquement conductrices, l'outillage de mise en oeuvre comprend au moins deux parties, sous la forme d'un poinçon (310) et d'une matrice (320). Selon cet exemple de réalisation , la matrice (320) est constituée d'un matériau métallique, bon conducteur de la chaleur tel qu'un alliage d'aluminium ou de cuivre sans que ces exemples ne soient limitatifs.

La matrice (320) comprend un ensemble de conduits (340) dans lesquels s'étendent des inducteurs (341). Lesdits inducteurs se présentent sous la forme de tubes de cuivres ou de câbles de Litz. Selon un exemple de réalisation, l'intérieur desdits conduits comprend un chemisage (342) constitué d'un matériau ferromagnétique sur une épaisseur comprise entre 0,2 mm et 2 mm. Ainsi, lorsque l'inducteur (341) est alimenté en courant à haute fréquence, les courants induits circulent dans le chemisage ferromagnétique (342), provoquant l'échauffement de celui-ci.

La chaleur est transmise à la matrice et se propage par conduction jusqu'à la surface moulante de celle-ci, qui monte en température.

Avantageusement lesdits conduits (340) comprenant les inducteurs (341) sont situés à une distance d de l'empreinte de la matrice de sorte à assurer une température uniforme sur les surfaces moulantes de ladite matrice.

Alternativement la matrice est constituée d'un matériau, par exemple un acier, ferromagnétique, dans ce cas le chemisage des conduits (340) comprenant les inducteur (341) n'est pas nécessaire.

Avantageusement, la matrice comprend des conduits (360) pour la circulation d'un fluide caloporteur en vue de son refroidissement.

Le moule est ici représenté en position ouverte. Le rapprochement du poinçon (310) et de la matrice (320) ainsi que les moyens (312) d'étanchéité permettent de définir une cavité étanche dans laquelle est comprise la préforme tricotée (100).

Selon ce mode de réalisation, le poinçon comprend une vessie (350) et des moyens (351) pour gonfler ladite vessie. La vessie (350) est constitué d'un élastomère résistant à la température de fusion du polymère compris dans la préforme.

À titre d'exemple ladite vessie est constituée de silicone chargé de carbone. Ce mode de réalisation permet de compacter toutes les faces de la préforme, en gonflant ladite vessie, même si l'empreinte ne comprend pas de conicité s'évasant vers la base du poinçon, voire même comprend une conicité inverse, par exemple lorsque le procédé objet de l'invention est utilisé pour la fabrication d'un casque. Dans ce cas, la matrice comprend au moins deux parties séparables pour permettre le démoulage de la pièce finale.

Cet exemple de réalisation, où le poinçon comprend une vessie (350), est également utilisable dans l'exemple de réalisation de l'outillage représenté figure 1. Dans ce cas, la face de la vessie entrant en contact avec la préforme (100) lors de la fabrication de la pièce comprend un revêtement électriquement conducteur lié électriquement au reste du poinçon, pour assurer la circulation des courants induits, ce revêtement peut être en outre ferromagnétique.

Selon un exemple d'utilisation de l'outillage correspondant à ce mode de réalisation, la préforme tricotée (100) est insérée dans l'empreinte de la matrice (320); Le poinçon est rapproché de la matrice créant une cavité étanche dans laquelle est comprise la préforme. La vessie (350) est gonflée à une première pression pour assurer le contact avec la préforme. Les inducteurs (341) sont alimentés en courant à haute fréquence, ce qui a pour effet de chauffer la cavité moulante et de porter à son point de fusion le polymère compris dans la préforme tricotée.

La pression de gonflage de la vessie (350) est augmentée de sorte à assurer le compactage de la préforme. La température est maintenue dans la cavité moulante de sorte à assurer une imprégnation uniforme de la préforme, ce temps de maintien étant fonction du taux de fibres et de la viscosité du polymère.

Puis, l'alimentation des inducteurs est arrêtée et le fluide caloporteur est envoyé dans les canaux de refroidissement (360) de sorte à refroidir le moule et la pièce ainsi réalisée, à une température adaptée à son démoulage.

Dans le cas où l'outillage représenté figure 1 comprend une telle vessie gonflable comportant un revêtement conducteur tel que décrit plus haut, que cette vessie soit liée à la matrice ou au poinçon, la séquence d'opérations telle que décrite ci-dessus est la même.

Comme pour l'exemple de la figure 1, d'autres variantes de réalisation sont possible, où le poinçon ne comprend pas de vessie et où les moyens de chauffage et de refroidissement sont compris dans le poinçon ou même dans le poinçon et la matrice, la préforme étant disposée sur le poinçon plutôt que dans la matrice.

Ainsi, la combinaison de l'utilisation d'un moule à chauffage autonome par induction, selon l'un quelconque des exemples de réalisation présentés ci-avant ou une combinaison de ces exemples de réalisation, avec une préforme tricotée comprenant son polymère d'imprégnation, permet de réaliser en grande série, dans des temps de réalisation réduits et en une seule opération de consolidation, des pièces de forme complexe comprenant un taux de fibres élevé.

Le procédé objet de l'invention est ainsi particulièrement adapté à la réalisation de pièces composite visant des marchés de forte consommation.

L'association d'un taux de fibres élevé, d'un polymère thermoplastique constituant la matrice et du mode d'organisation des fibres dans le composite, rend ces pièces particulièrement résistantes aux impacts et permet de conserver un taux de fibres important dans des zones qui, selon les procédés de l'art antérieur, présentent un taux de fibre réduit, notamment les coin des malles dans l'exemple représenté.

Or ces zones, notamment les zones de raccordement trièdre ou coin de malle, sont des zones particulièrement sollicitées sur les produits visés par l'invention, notamment en termes d'impacts, comme sur une coque de valise.

Figure 4, selon une première étape (410) du procédé objet de l'invention, la préforme est tricotée de sorte à correspondre à la forme de la pièce finale. Ladite préforme comprend le polymère thermoplastique d'imprégnation de la pièce finale, soit sous forme comêlée dans les fils tricotés, soit sous forme d'enduit sur les fils tricotés, soit par le tricot de fils de renfort et de fils constitués du polymère d'imprégnation.

Ledit polymère est stable de sorte que ladite préforme peut être stockée sans limite de temps ou produite sur un site à distance du site de transformation.

Selon une étape de chargement (420) la préforme ainsi obtenue est installé sur ou dans l'outillage selon l'un quelconque de ses modes de réalisation, le moule étant ouvert.

Selon un mode de réalisation particulier, correspondant au cas où la technique de tricot ne permet pas d'obtenir une préforme à contour fermé, une étape (425) de soudure est réalisée directement dans l'outillage afin de maintenir fermé le contour de la préforme.

Selon une étape (430) d'imprégnation/consolidation, le moule est fermé, appliquant ainsi une première pression sur la préforme, et la cavité moulante délimitée entre le poinçon et la matrice est portée à une température supérieure ou égale à la température de fusion du polymère d'imprégnation.

Selon un mode de réalisation particulier, le procédé objet de l'invention comprend une étape (427) de tirage au vide de la cavité comprenant la préforme après la fermeture du moule.

Selon une étape de maintien (440) la cavité moulante et la préforme sont maintenues à la température atteinte lors de l'étape précédente (430) tout en maintenant la pression de contact entre les surfaces moulantes du poinçon et de la matrice et la préforme.

Selon une variante de mise oeuvre, l'étape de maintien (440) comporte une étape de compactage (445) consistant à augmenter la pression sur la préforme, soit en rapprochant le poinçon et la matrice soit en appliquant une pression de gonflage supplémentaire sur les moyens expansibles (vessie) de la matrice ou du poinçon.

Selon une étape de refroidissement (450) la cavité moulante et la préforme sont refroidies par la circulation d'un fluide caloporteur dans le moule, tout en maintenant la pression sur la préforme.

Le refroidissement (450) est poursuivi jusqu'à ce que la température dans la cavité moulante soit inférieure ou égale à la température de transition vitreuse du polymère d'imprégnation.

Selon un étape de démoulage (460) le moule est ouvert et la pièce démoulée. Le cycle reprend alors à l'étape de chargement (420) avec une nouvelle préforme.

## Revendications

1. Procédé pour la réalisation d'une pièce composite de forme tridimensionnelle non développable (500) comprenant 5 faces et 4 zones (501) de raccordement trièdre entre les faces, à matrice thermoplastique et renfort continu **caractérisé en ce qu'**il comprend les étapes consistant à :
a. obtenir (410) une préforme fibreuse (500) préimprégnée du polymère constituant la matrice correspondant à la forme de la pièce finale, par tricotage tridimensionnel, la préforme fibreuse comprenant 5 faces et 4 zones (501) de raccordement trièdre entre les faces ;
b. placer (420) la préforme entre un poinçon (120, 320) et une matrice (110, 310) appairés et distants d'un entrefer (e) d'un outillage, définissant entre eux une cavité fermée étanche lors de la fermeture de l'outillage;
c. fermer l'outillage de sorte à appliquer une première pression à la préforme ;
d. porter (430) la cavité à la température de fusion du polymère imprégnant la préforme en maintenant la première pression ;
e. refroidir (450) la cavité comprenant la préforme jusqu'à une température adaptée au démoulage en maintenant une deuxième pression ;
f. ouvrir le moule et démouler (460) la pièce.

2. Procédé selon la revendication 1, dans lequel l'étape c) comprend un tirage au vide (427) de la cavité.

3. Procédé selon la revendication 1, comprenant entre les étapes d) et f) une étape consistant à :
g. maintenir (440) la température pendant un temps adapté à l'imprégnation de la préforme par le polymère ;

4. Procédé selon la revendication 3, dans lequel une deuxième pression est appliquée (445) sur la préforme au cours de l'étape g).

5. Procédé selon la revendication 1, dans lequel la préforme tricotée est obtenue à partir d'un fil constitué de brins de la fibre de renfort comêlés avec des brins constitués du polymère d'imprégnation.

6. Procédé selon la revendication 1, dans lequel la préforme tricotée est obtenue à partir d'un fil enduit du polymère d'imprégnation.

7. Procédé selon la revendication 1, dans lequel la préforme est obtenue par le tricotage de fils constitués de la fibre de renfort et de fils constitués du polymère d'imprégnation.

8. Procédé selon la revendication 7, dans lequel la fibre de renfort est un polymère dont la température de fusion est supérieure à la température de fusion du polymère d'imprégnation.

9. Procédé selon la revendication 1, dans lequel la préforme est tricotée en utilisant la technique du tricotage à fléchage.

10. Procédé selon la revendication 1, dans lequel la préforme est tricotée en utilisant la technique de la maille reportée.

11. Procédé selon la revendication 4, dans lequel la première et la deuxième pressions sont appliquées sur la préforme en faisant varier entre deux valeurs l'entrefer entre le poinçon et la matrice, au niveau de la cavité fermée.

## Patentansprüche

1. Verfahren zur Herstellung eines Verbundteils mit nicht entwicklungsfähiger dreidimensionaler Form (500), das 5 Flächen und 4 Bereiche (501) mit dreiflächiger Verbindung zwischen den Flächen umfasst, mit einer thermoplastischen Matrix und kontinuierlicher Verstärkung, **dadurch gekennzeichnet, dass** es die folgenden Schritte umfasst:
a. Herstellung (410) eines faserigen Vorformlings (500), der mit dem Polymer vorimprägniert ist, das die Matrix bildet, die der Form des Endstücks entspricht, durch dreidimensionales Stricken, wobei der faserige Vorformling 5 Flächen und 4 Bereiche (501) mit dreiflächiger Verbindung zwischen den Flächen aufweist;
b. Anordnen (420) der Vorform zwischen einem gepaarten Stempel (120, 320) und einer Matrize (110, 310), die durch einen Luftspalt (e) eines Werkzeugs voneinander entfernt sind und zwischen sich einen abgedichteten Hohlraum bilden, wenn das Werkzeug geschlossen ist;
c. Schließen des Werkzeugs, wodurch ein erster Druck auf den Vorformling ausgeübt wird;
d. Bringen (430) des Hohlraums auf eine Schmelztemperatur des Polymers, mit dem der Vorformling imprägniert ist, während der erste Druck aufrechterhalten wird;
e. Abkühlen (450) des Hohlraums, der den Vorformling enthält, auf eine für die Entformung geeignete Temperatur unter Aufrechterhaltung eines zweiten Drucks;
f. Öffnen der Form und Entformen (460) des Teils.

2. Verfahren nach Anspruch 1, wobei Schritt c) das Evakuieren des Hohlraums auf Vakuum (427) umfasst.

3. Verfahren nach Anspruch 1, das zwischen den Schritten d) und f) den folgenden Schritt umfasst:
g. Aufrechterhaltung (440) der Temperatur für eine Zeit, die für die Imprägnierung der Vorform mit dem Polymer geeignet ist;

4. Verfahren nach Anspruch 3, wobei der zweite Druck während des Schritts g) auf die Vorform angewendet wird (445).

5. Verfahren nach Anspruch 1, wobei die gestrickte Vorform aus einem Garn erhalten wird, das aus Strängen der Verstärkungsfaser besteht, die mit Strängen aus dem imprägnierenden Polymer vermischt sind.

6. Verfahren nach Anspruch 1, wobei die gestrickte Vorform aus einem mit dem imprägnierenden Polymer beschichteten Garn erhalten wird.

7. Verfahren nach Anspruch 1, wobei die Vorform durch Stricken eines Garns erhalten wird, das aus Strängen der Verstärkungsfaser besteht, die mit Strängen aus dem imprägnierenden Polymer vermischt sind.

8. Verfahren nach Anspruch 7, wobei die Verstärkungsfaser ein Polymer mit einer Schmelztemperatur ist, die höher ist als die Schmelztemperatur des Imprägnierpolymers.

9. das Verfahren nach Anspruch 1, wobei der Vorformling unter Verwendung einer Fingerwebstricktechnik gestrickt wird.

10. das Verfahren nach Anspruch 1, wobei der Vorformling unter Verwendung einer Transfermaschen-Stricktechnik gestrickt wird.

11. Verfahren nach Anspruch 4, bei dem der erste und der zweite Druck auf die Vorform in der geschlossenen Kavität ausgeübt werden, indem der Luftspalt zwischen dem Stempel und der Matrize zwischen zwei Werten variiert wird.

## Claims

1. A method for making a composite part of non-developable three-dimensional shape (500) comprising 5 faces and 4 areas (501) of trihedral connection between the faces, with a thermoplastic matrix and continuous reinforcement, **characterized in that** it comprises the steps of:
a. obtaining (410) a fibrous preform (500) preimpregnated with the polymer making the matrix corresponding to the shape of the final piece, by three-dimensional knitting, the fibrous preform comprising 5 faces and 4 areas(501) of trihedral connection between the faces;
b. placing (420) the preform between a paired punch (120, 320) and a die (110, 310) and distant each other by an air gap (e) of a tooling, defining between them a sealed cavity when the tooling is closed;
c. closing the tooling thus applying a first pressure on the preform;
d. bringing (430) the cavity to a melting temperature of the polymer impregnating the preform while maintaining the first pressure;
e. cooling (450) the cavity comprising the preform to a temperature suitable for demolding by maintaining a second pressure;
f. opening the mold and unmolding (460) the part.

2. The method according to the claim 1, wherein step c) comprises evacuating to vacuum (427) the cavity.

3. The method of claim 1, comprising between steps d) and f) a step of:
g. maintaining (440) the temperature for a time suitable for impregnating the preform with the polymer;

4. The method of claim 3, wherein the second pressure is applied (445) to the preform during step g).

5. The method of claim 1, wherein the knitted preform is obtained from a yarn consisting of strands of the reinforcing fiber commingled with strands made of the impregnating polymer.

6. The method of claim 1, wherein the knitted preform is obtained from a yarn coated with the impregnating polymer.

7. The method of claim 1, wherein the preform is obtained by knitting a yarn consisting of strands of the reinforcing fiber commingled with strands made of the impregnating polymer.

8. The method of claim 7, wherein the reinforcing fiber is a polymer having a melting temperature greater than the melting temperature of the impregnating polymer.

9. The method of claim 1, wherein the preform is knitted using a finger weaving knitting technique.

10. The method of claim 1, wherein the preform is knitted using a transferred mesh knitting technique.

11. The method of claim 4, wherein the first and the second pressures are applied to the preform in the closed cavity by varying the air gap between the punch and the die between two values.
